# EUROPÄISCHE PATENTSCHRIFT

(11) **EP 1 142 747 B1**
(45) Veröffentlichungstag und Bekanntmachung des Hinweises auf die Patenterteilung: **14.05.2008**
(21) Anmeldenummer: 01105224.8
(22) Anmeldetag: 03.03.2001
(51) Int. Cl.: B60K 35/00

(54) **Anzeigeinstrument**
Dial indicator
Dispositif indicateur

(30) Priorität: 08.04.2000 DE 10017588
(43) Veröffentlichungstag der Anmeldung: 10.10.2001
(73) Patentinhaber: VDO Automotive AG, 93055 Regensburg (DE)
(72) Erfinder: Kabatek, Ulrich, Dr., 64832 Babenhausen (DE); Leimbach, Jürgen, 93055 Regensburg (DE); Tiede, Lutz-Wolfgang, 93138 Lappersdorf (DE)

(56) Entgegenhaltungen:
- EP-A- 0 884 709
- EP-A- 0 900 686
- DE-A- 3 619 824
- DE-A- 4 031 870
- DE-A- 4 325 721
- DE-A- 19 615 249
- DE-U- 29 703 904
- US-A- 1 754 954
- US-A- 2 112 704
- US-A- 3 180 309

## Beschreibung

Die Erfindung betrifft ein Anzeigeinstrument für ein Fahrzeug mit einer analogen Anzeige der aktuellen Messwerte und mit einer veränderlichen Anzeige eines Referenzwertes.

Anzeigeinstrumente der vorstehenden Art werden beispielsweise als Barometer für die Bestimmung des Luftdrucks gebaut. Solche Barometer haben einen von Hand zu verdrehenden Zeiger, so dass man den aktuellen Luftdruck einstellen kann und deshalb die Möglichkeit hat, nach einiger Zeit zu erkennen, ob der Luftdruck gestiegen oder gefallen ist. Ähnlich sind auch in einigen Fällen Tachometer für Schlepper gestaltet. Dadurch hat der Fahrer beispielsweise beim Pflügen die Möglichkeit, die für den jeweils verwendeten Pflug und für den jeweiligen Boden optimale Fahrgeschwindigkeit zu markieren, so dass ihm Abweichungen deutlicher auffallen, als wenn er sich lediglich die richtige Geschwindigkeit merken müsste.

In einem Fahrzeug verändern sich oftmals maßgebliche Referenzgrößen. Sachkundige Fahrer eines Kraftfahrzeugs wissen beispielsweise, dass man bei noch kaltem Verbrennungsmotor mit niedrigerer Drehzahl fahren sollte als bei Betriebstemperatur des Verbrennungsmotors. Nicht klar ist jedoch, mit welcher maximalen Drehzahl man tatsächlich während der Aufwärmphase des Verbrennungsmotors fahren darf.

Für den Tachometer eines Kraftfahrzeugs ändert sich die Referenzgeschwindigkeit während des Fahrens sehr häufig. Sie beträgt beispielsweise in Ortschaften höchstens 50 km/h, auf Landstraßen 100 km/h und kann zusätzlich von unterschiedlichen Geschwindigkeitsbegrenzungen abhängen. Der Fahrer könnte deshalb beim Erkennen einer Geschwindigkeitsbegrenzung diese ähnlich wie bei einem Barometer durch manuelles Verstellen eines Referenzzeigers auf seinem Tachometer markieren, was jedoch angesichts der sehr vielen und häufig wechselnden, oftmals logisch nicht nachvollziehbaren Geschwindigkeitsbegrenzungen mühsam wäre und häufig auch falsch ausgeführt würde.

Aus der DE 196 15 249 A ist ein Anzeigeinstrument nach dem Oberbegriff des Anspruchs 1 mit einer analogen Anzeige der aktuellen Messwerte und mit einer veränderlichen Anzeige eines Referenzwertes bekannt, wobei eine automatische Stelleinrichtung für die Anzeige des Referenzwertes in Abhängigkeit von veränderlichen, für die angezeigte Messgröße bedeutsamen Daten vorhanden ist.

US 3 180 309 A zeigt ein manuell verdrehbares Tachometer.

Aus der EP-A-0 900 686 ist ein Drehzahlmesser bekannt mit einer automatischen Stelleinrichtung für die Anzeige des Referenzwertes, für die angezeigte Messgröße bedeutsamen Daten, wobei die Stelleinrichtung zum Verstellen des Referenzwertes auf Grund der Öltemperatur des Verbrennungsmotors des Fahrzeugs arbeitet.

Die DE 43 25 721 A beschreibt ein Tachometer für ein Fahrzeug mit einer analogen Anzeige der aktuellen Messwerte und mit einer veränderlichen Anzeige eines Referenzwertes, mit einer automatischen Stelleinrichtung für die Anzeige eines Referenzwertes in Abhängigkeit von veränderlichen, für die angezeigte Messgröße bedeutsamen Daten, mit manueller Eingabe des Referenzwertes und mit Mitteln zum unterschiedlich farbigen Beleuchten zumindest des Sektors zwischen dem den aktuellen Messwert anzeigenden Zeiger und dem Referenzwert je nach Überschreiten oder Unterschreiten des Referenzwertes.

Der Erfindung liegt das Problem zugrunde, ein Anzeigeinstrument der eingangs genannten Art so auszubilden, dass es für den Benutzer möglichst leicht fällt, einen wechselnden Referenzwert zu berücksichtigen.

Dieses Problem wird erfindungsgemäß gelöst durch eine automatische Stelleinrichtung mit den Merkmalen des Anspruchs 1.

Erfindungsgemäß handelt es sich um einen Tachometer und die Stelleinrichtung zum Verstellen des Referenzwertes ist aufgrund der Position des Fahrzeugs ausgebildet. Hierdurch braucht der Fahrer beispielsweise nicht mehr auf Ortsschilder zu achten, um die in Ortschaften bestehende Geschwindigkeitsbegrenzung einzuhalten, vielmehr wird ihm aufgrund seiner Fahrzeugposition automatisch die nach dem Passieren eines Ortsschildes geänderte Referenzgeschwindigkeit auf seinem Tachometer signalisiert, so dass er aufgrund der Winkeldifferenz zwischen dem Tachometerzeiger und der Anzeige des Referenzwertes sehr rasch erkennen kann, ob er zu schnell oder unnötig langsam ist.

Die notwendigen Stellbefehle in Abhängigkeit von der Fahrzeugposition werden erfindungsgemäß sehr kostengünstig gewonnen, da die Stelleinrichtung zum Verstellen des Referenzwertes aufgrund von Stellbefehlen eines Navigationssystems des Fahrzeugs ausgebildet ist. Ein solches Navigationssystem kennt ohnehin die jeweiligen Örtlichkeiten aufgrund von abgespeicherten Straßenkarten und weiß aufgrund seines Ortungssystems, wo sich das Fahrzeug gerade befindet, so dass die Steuerung der Anzeige des Referenzwertes kaum zusätzlichen Aufwand bedingt.

Trotz der automatischen Steuerung der Referenzwertanzeige braucht nicht zwingend dem Fahrer die Möglichkeit genommen zu werden, nach eigenem Wunsch eine Referenzwertanzeige einzustellen, wenn der Referenzwert zusätzlich zur automatischen Eingabe manuell einzugeben ist. Das kann beispielsweise vorteilhaft sein, wenn man einen PKW vorübergehend mit Anhänger benutzt und dann die dafür vorgeschriebene Geschwindigkeitsbegrenzung einhalten muss.

Besonders leicht zu erkennen ist eine Abweichung vom Referenzwert dadurch, dass die Stelleinrichtung zum Verdrehen des Anzeigeinstrumentes in eine solche Position ausgebildet ist, in der bei Übereinstimmung zwischen dem aktuellen Messwert und dem Referenzwert der Zeiger waagerecht oder senkrecht steht, da erfahrungsgemäß das Auge Winkelabweichungen von der Horizontalen oder Vertikalen besonders rasch erfassen kann.

Zur weiteren Verdeutlichung der Abweichung von einem Referenzwert kann es vorteilhaft sein, wenn Mittel zum unterschiedlich farbigen Beleuchten zumindest des Sektors zwischen dem den aktuellen Messwert anzeigenden Zeiger und dem Referenzwert je nach Überschreiten oder Unterschreiten des Referenzwertes vorgesehen sind.

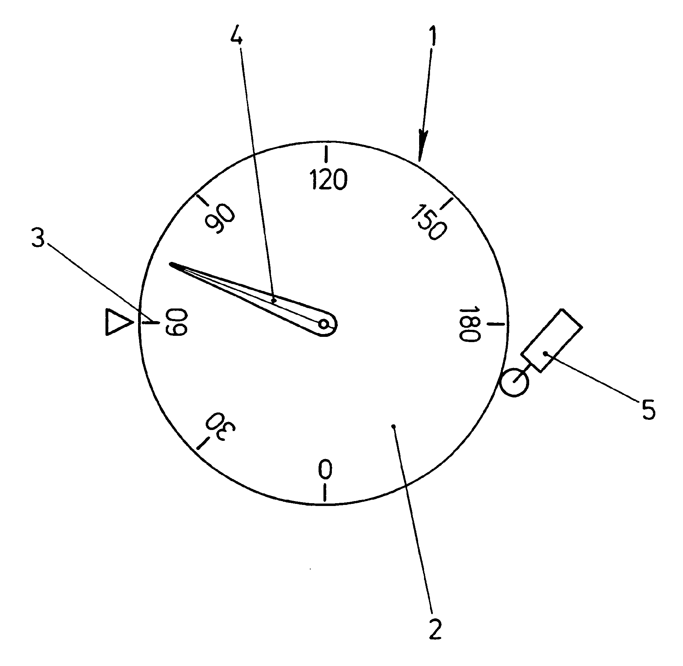

Zur weiteren Verdeutlichung des Grundprinzips der Erfindung ist in der Zeichnung ein als Tachometer ausgebildetes, mechanisches Anzeigeinstrument stark schematisch dargestellt. Natürlich kann die Erfindung auch elektronisch mittels einer Flüssigkristall-Anzeige verwirklicht werden, indem auf dieser Anzeige ein Tachometer abgebildet wird.

Die Zeichnung zeigt ein als Tachometer ausgebildetes Anzeigeinstrument 1, welches eine Skala 2 mit Geschwindigkeitsmarkierungen 3 hat. Über diese Skala 2 ist ein Zeiger 4 beweglich, welcher auf der Skala 2 die jeweils gemessene Geschwindigkeit anzeigt. Durch eine automatische Stelleinrichtung 5 ist das gesamte Anzeigeinstrument derart verdrehbar, dass ein Referenzwert auf der Skala 2 horizontal ausgerichtet ist. In dem gezeigten Beispiel soll das Fahrzeug gerade einen Bereich befahren, in welchem die erlaubte Höchstgeschwindigkeit 60 km/h beträgt. Aus der von der Horizontalen abweichenden Ausrichtung des Zeigers 4 erkennt man mit einem Blick, dass man mit höherer Geschwindigkeit fährt als erlaubt.

Wenn man mit dem Fahrzeug beispielsweise eine Autobahn befährt, auf der die Geschwindigkeit auf 120 km/h beschränkt ist, dann wird mit der Stelleinrichtung 5 das gesamte Anzeigeinstrument um 105° entgegen dem Uhrzeigersinn verdreht, so dass dann die 120 km/h-Markierung horizontal ausgerichtet ist und wiederum aufgrund der Zeigerabweichung von der Horizontalen rasch erkannt werden kann, ob man von der Referenzgeschwindigkeit abweicht.

## Patentansprüche

1. Anzeigeinstrument für ein Fahrzeug mit einer analogen Anzeige der aktuellen Messwerte und mit einer veränderlichen Anzeige eines Referenzwertes, wobei eine automatische Stelleinrichtung (5) für die Anzeige des Referenzwertes in Abhängigkeit von veränderlichen für die angezeigte Messgröße bedeutsamen Daten vorhanden ist und wobei es sich um ein Tachometer handelt und die Stelleinrichtung (5) zum Verstellen des Referenzwertes aufgrund der Position des Fahrzeugs ausgebildet ist, und wobei die Stelleinrichtung (5) zum Verstellen des Referenzwertes aufgrund von Stellbefehlen eines Navigätionssystems des Fahrzeugs ausgebildet ist, **dadurch gekennzeichnet, dass** das Navigationssystem abgespeicherte Straßenkarten enthält, dass die Stelleinrichtung (5) zum Verdrehen des Anzeigeinstrumentes (1) in eine solche Position ausgebildet ist, in der bei Übereinstimmung zwischen dem aktuellen Messwert und dem Referenzwert der Zeiger (4) waagerecht oder senkrecht steht.

2. Anzeigeinstrument nach Anspruch 1, **dadurch gekennzeichnet, dass** die Stelleinrichtung (5) zum Verstellen des Referenzwertes aufgrund einer automatischen Bilderkennung von Verkehrsschildern arbeitet.

3. Anzeigeinstrument nach zumindest einem der vorangehenden Ansprüche, **dadurch gekennzeichnet, dass** der Referenzwert zusätzlich zur automatischen Eingabe manuell einzugeben ist.

4. Anzeigeinstrument nach Anspruch 3, **gekennzeichnet durch** Mittel zum unterschiedlich farbigen Beleuchten zumindest des Sektors zwischen dem den aktuellen Messwert anzeigenden Zeiger (4) und dem Referenzwert je nach Überschreiten oder Unterschreiten des Referenzwertes.

## Claims

1. Indicating instrument for a vehicle, having an analog indication of the current measured valued and having a variable indication of a reference value, in which an automatic setting device (5) is available and to indicate the reference value on the basis of variable data that are significant for the indicated measured variable in which it is a tachometer, and the setting device (5) is designed to adjust the reference value on the basis of the position of the vehicle, and in which the setting device (5) is designed to adjust the reference value on the basis of setting commands from a vehicle navigation system, **characterized in that** the navigation system has stored road maps, that the setting device (5) is designed to rotate the indicating instrument (1) into a position in which, when there is agreement between the current measured value and the reference value, the pointer (4) is horizontal or vertical.

2. Indicating instrument according to claim 1, **characterized in that** the setting device (5) for adjusting the reference value operates on the basis of automatic image recognition of traffic signs.

3. Indicating instrument according to at least one of the preceding claims, **characterised in that** the reference value has to be input manually in addition to the automatic input.

4. Indicating instrument according to claim 3, **characterized by** means for the differently colored illumination at least of the sector between the pointer (4) indicating the current measured value and the reference value, depending on whether the measured value falls above or below the reference value.

## Revendications

1. Appareil indicateur pour véhicule, comportant un affichage analogique des valeurs de mesure actuelles et un affichage variable d'une valeur de référence, où se trouve un système automatique de réglage (5) permettant l'affichage de la valeur de référence en fonction de données variables déterminantes pour la grandeur de mesure affichée et où il s'agit d'un compteur de vitesse et où le système de réglage (5) est conçu pour régler la valeur de référence sur la base de la position du véhicule et où le système de réglage (5) est conçu pour régler la valeur de référence sur la base d'instructions de réglage d'un système de navigation du véhicule, **caractérisé par le fait que** le système de navigation renferme des cartes routières mémorisées, que le système de réglage (5) est conçu pour faire tourner l'appareil indicateur (1) dans une position telle que l'aiguille (4) est horizontale ou verticale lorsqu'il y a concordance entre la valeur actuelle de mesure et la valeur de référence.

2. Appareil indicateur selon la revendication 1, **caractérisé par le fait que** le système de réglage (5) permettant de régler la valeur de référence fonctionne sur la base d'une reconnaissance automatique de panneaux routiers.

3. Appareil indicateur selon au moins l'une des revendications précédentes, **caractérisé par le fait que** la valeur de référence peut être saisie manuellement en plus de la saisie automatique.

4. Appareil indicateur selon la revendication 3, **caractérisé par** des moyens permettant d'éclairer avec des couleurs différentes, en fonction d'un dépassement vers le haut ou vers le bas de la valeur de référence, au moins le secteur compris entre l'aiguille (4) indiquant la valeur actuelle de mesure et la valeur de référence.
